Europäisches Patentamt

European Patent Office

Office européen des brevets

(11) Veröffentlichungsnummer: **0 297 284**
**A2**

(12) **EUROPÄISCHE PATENTANMELDUNG**

(21) Anmeldenummer: 88108463.6

(51) Int. Cl.⁴ **B60R 1/06**

(22) Anmeldetag: 27.05.88

(30) Priorität: 02.06.87 DE 8707844 U
13.07.87 DE 8709610 U

(43) Veröffentlichungstag der Anmeldung:
04.01.89 Patentblatt 89/01

(84) Benannte Vertragsstaaten:
AT BE CH DE ES FR GB IT LI LU NL SE

(71) Anmelder: HOHE KG
Hauptstrasse 36
D-6981 Collenberg(DE)

(72) Erfinder: Helferich, Bernd, Dipl.-Ing.
Stiegelgasse 13
D-8751 Mömlingen(DE)

(74) Vertreter: Zinngrebe, Horst, Dr.rer.nat.
Saalbaustrasse 11
D-6100 Darmstadt(DE)

(54) **Aussenrückspiegel.**

(57) Die Erfindung betrifft einen Außenrückspiegel für ein Fahrzeug mit einem Spiegelfuß und einem relativ zum Spiegelfuß aus einer Gebrauchsstellung nach vorne und hinten klappbaren Spiegelgehäuse, dessen spiegelfußnaher Randwulst mittels einer am Spiegelfuß verankerten und an einem Innenteil des Spiegelgehäuses angreifenden Feder gegen den im wesentlichen ebenen Rand einer Fußplatte des Spiegelfußes gehalten ist, wobei der hintere, im wesentlichen gerade Abschnitt des Randwulstes mit dem Rand eine hintere Klappachse bildet und der Randwulst eine Spiegelgehäuseöffnung für die Feder oder ein mit der Feder und dem Spiegelfuß verbundenes Zugorgan umschließt. Um dem Außenspiegel eine windschlüpfige Form zu verleihen und seine nahtlose Einbettung in die Form der Fahrzeugaußenhaut zu ermöglichen, wobei zum Abklappen an die Fahrzeugkarosserie wenig Raum erforderlich sein soll, ist vorgesehen, daß der vordere Teil der Fußplatte eine Ausnehmung derart aufweist, daß beim Abklappen nach vorne der vordere fußplattennahe Spiegelgehäuseteil in die Ausnehmung eintaucht.

Fig. 1

Die Erfindung betrifft einen Außenrückspiegel für ein Fahrzeug mit einem Spiegelfuß und einem relativ zum Spiegelfuß aus einer Gebrauchsstellung nach vorne und hinten klappbaren Spiegelgehäuse, dessen spiegelfußnaher Randwulst mittels einer am Spiegelfuß verankerten und an einem Innenteil des Spiegelgehäuses angreifenden Feder gegen den im wesentlichen ebenen Rand einer Fußplatte des Spiegelfußes gehalten ist, wobei der hintere, im wesentlichen gerade Abschnitt des Randwulstes mit dem Rand eine als hintere Klappachse bildet und der Randwulst eine Spiegelgehäuseöffnung für die Feder oder ein mit der Feder und dem Spiegelfuß verbundenes Zugorgan umschließt.

Dieser aus der DE-OS 32 20 893 bekannte Außenrückspiegel besitzt ein im Querschnitt im wesentlichen rechtwinkliges Spiegelgehäuse, dessen dem Fahrtwind voll ausgesetzte Rückwand nur wenig gebogen ist. Damit setzt das Spiegelgehäuse dem Fahrtwind eine relativ große Angriffsfläche entgegen, die besonders bei schneller Fahrt des Kraftfahrzeuges zu Windgeräuschen Anlaß geben kann. Da das Spiegelgehäuse nach dem Anbau des Spiegels an die Fahrzeugkarosserie zu dieser relativ winklig absteht, fügt sich die Gestaltung des Außenspiegels nicht optimal in das Styling mancher moderner Fahrzeugtypen ein.

Ferner ist bei bekannten Außenspiegeln nachteilig, daß zum Abklappen des Spiegelgehäuses gegen Fahrtrichtung relativ viel seitlicher Raum dann beansprucht wird, wenn das Spiegelgehäuse in Gebrauchslage strömungsgünstig schräg nach hinten weisend am Spiegelfuß gehalten ist.

Mit der Erfindung soll daher ein Außenspiegel der eingangs genannten Art geschaffen werden, der eine windschlüpfige Form des Spiegelgehäuses und ihre nahtlose Einbettung in die formliche Gestalt der Fahrzeugaußenhaut erlaubt und sich raumsparend zur Fahrzeugkarosserie hin abklappen läßt.

Dazu ist erfindungsgemäß vorgesehen, daß der vordere Teil der Fußplatte eine Ausnehmung derart aufweist, daß beim Abklappen nach vorne der vordere fußplattennahe Spiegelgehäuseteil in die Ausnehmung eintaucht. Damit wird es möglich, ausgehend von einer an der Karosserie befestigten Montageplatte des Fußteils dem Außenrückspiegel von vorn eine von der Linienführung der Fahrzeugkarosserie ausgehende, sich in sanftem Bogen nach außen schwingende Form zu geben, die sowohl die Windschlüpfigkeit des Spiegelgehäuses erhöht wie auch einen unschönen Absatz zwischen Spiegel und Fahrzeugkarosserie vermeidet, wobei das Spiegelgehäuse beim Abklappen nach vorne einen wenig ausladenden Bogen beschreibt.

Um den Randwulst beim Abklappen des Spiegelgehäuses nach vorne vor Beschädigungen am Spiegelfuß zu schützen ist in bevorzugter Weiterbildung der Erfindung vorgesehen, daß an einem vorderen Abschnitt der Fußplatte ein vorderes offenes Wälzlager für eine innerhalb des Randwulstes am Spiegelgehäuse ausgebildete Leiste ausgebildet ist. Dies läßt sich beispielsweise dadurch realisieren, daß an der Fußplatte zwei beabstandete Gabeln befestigt sind, in welchen die Leiste nach Art einer Welle für das Abklappen des Spiegelgehäuses nach hinten ausrückbar gehalten ist.

Um für die vordere Abklappung eine definierte Endlage zu schaffen sieht die Erfindung in Weiterbildung vor, daß die Fußplatte eine Schulter zur Anlage des Randwulstes bei voll nach vorne geklappter Stellung des Spiegelgehäuses aufweist, gegen welche dann zweckmäßig ein am Spiegelgehäuse ausgebildeter Ansatz anliegt. Die Schulter kann beispielsweise von einer von der Fußplatte einwärts zurückspringende Querwand sein, welcher Teil der hinteren Begrenzung der Ausnehmung ist.

Ein gefälliges Erscheinungsbild des Außenspoiegels erhält man, wenn beispielsweise die Ausnehmung in Gebrauchslage des Spiegelgehäuses von dem Randwulst abgedeckt ist und gegebenenfalls von einer in die Querwand übergehenden kalottenförmig gebogenen Wand umschlossen ist.

Die das Rückholen des Spiegelgehäuses aus der Abklappstellung besorgende Feder ist in zweckmäßiger Ausgestaltung der Erfindung über ein biegbares Band etwa aus Federstahl an einem an der Fußplatte angelenkten Haken verankert und stützt sich auf einer spiegelfußnahen Stirnwand des Spiegelgehäuses im Inneren desselben ab.

Die Kopplung des Verstellmechanismus für den Spiegel mit der Spiegelglasträgerplatte bleibt bei den Abklappbewegungen des Spiegelgehäuses in einfacher Weise erhalten, wenn in bevorzugter Ausführungsform der Erfindung der gelenkig miteinander verbundene, starre Glieder aufweisende Mechanismus an einem Schieber angelenkt ist, welcher auf der Rückseite einer Spiegelglasträgerplatte verschiebbar geführt und von einer an der Spiegelglasträgerplatte befestigten Feder beaufschlagt ist.

Ferner ist es zur sicheren Lagerung des Spiegelgehäuses in der Gebrauchslage zweckmäßig, wenn nach der Erfindung aus der Fußplatte beispielsweise zwei beabstandete Paare beabstandeter Haltenocken und aus der Stirnwand gegenüber je einem der Paare je ein Führungsklotz vorstehen, wobei in Gebrauchslage je einer der Führungsklötze zwischen den Haltenocken je eines der beiden Paare eingefangen ist. Eine weitere zweckmäßige Lagesicherung des Spiegelgehäuses ist im Unteranspruch 11 angegeben.

Die Erfindung wird nachstehend anhand der in der beigefügten Zeichnung dargestellten Ausführungsbeispiele im einzelnen beschrieben.

Es zeigen:

Fig. 1 die Ansicht eines Querschnitts durch einen Außenrückspiegel, dessen Spiegelgehäuse in der Gebrauchslage und in der nach vorne abgeklappten Lage dargestellt ist;

Fig. 2 einen Auschnitt x in vergrößertem Maßstab aus Fig. 1;

Fig. 3 eine andere Ausführungsform eines Außenrückspiegels;

Fig. 4 eine schematische Ansicht der Fußplatte gemäß Fig. 3; und

Fig. 5 eine Schnittansicht längs der Linie V-V aus Fig. 4.

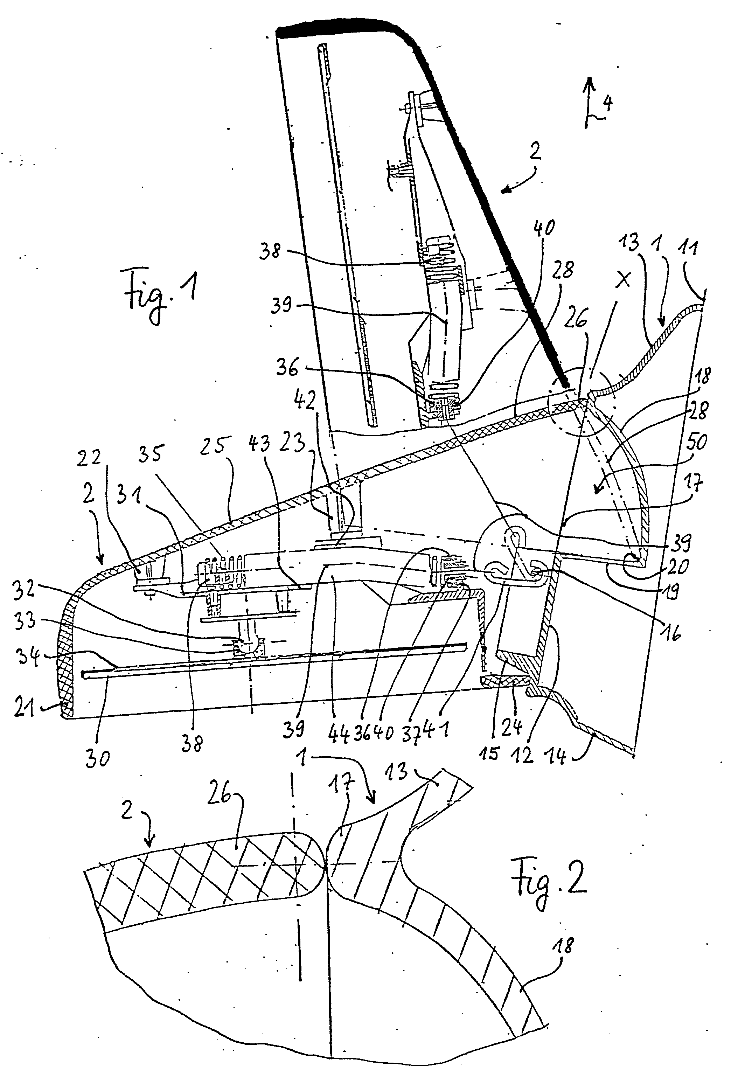

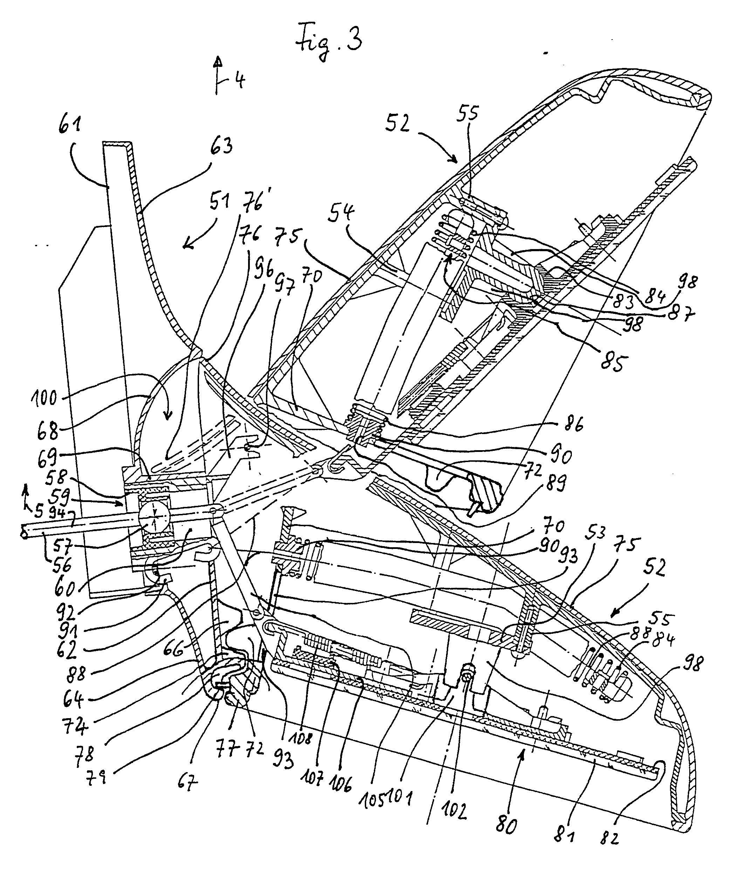

Der Außenrückspiegel weist gemäß Figuren 1 und 2 einen Spiegelfuß 1 sowie ein an dem Spiegelfuß gehaltenes Spiegelgehäuse 2 auf. Der Spiegelfuß 1 besitzt eine Montageplatte 11 sowie eine Fußplatte 12, welche über Seitenwände 13, 14 mit der Montageplatte 11 verbunden ist. Die Montageplatte 11 und die sich zur Montageplatte 11 im wesentlichen parallel erstreckende Fußplatte 12 umschließen zusammen mit den Seitenwänden 13 und 14 einen hohlen Raum, durch den sich hier nicht dargestellte Verstärkungswände oder -rippen erstrecken können. Die vordere Seitenwand 13 erstreckt sich aus dem vorderen Ende der Montageplatte 11 in einem sanften, geschwungenen Bogen nach außen und hinten in Richtung auf die Fußplatte 12.

Die hier verwendeten Lageangaben "vorne" und "hinten" beziehen sich auf die mit Pfeil 4 angedeutete Fahrtrichtung eines Kraftfahrzeugs, an das der dargestellte Außenrückspiegel anmontiert ist.

Aus der Fußplatte 12 erhebt sich an deren hinterem Ende eine Leiste 15, die an ihrem nach hinten weisenden Fuß ausgekehlt ist und dort als spiegelfußseitiges Gegenstück eines offenen Wälzlagers die hintere Achse für ein Nach-hinten-Klappen des Spiegelgehäuses 2 bildet. An der Fußplatte 12 ist ein Zapfen 16 verankert, der sich im dargestellten Ausführungsbeispiel der Erfindung parallel zur Fußplatte 12 erstreckt.

Das aus hartem Kunststoff bestehende Spiegelgehäuse 2 besitzt eine hintere, im wesentlichen rechtwinklige und von einem Rand 21 umfaßte Öffnung, die den Blick auf einen Spiegel 30 frei gibt. Das Spiegelgehäuse 2 umschließt eine Haltevorrichtung für den Spiegel 30, welche eine Tragplatte 31 aufweist. Die Tragplatte 31 ist auf mehrere Pfosten 22, 23 aufgeschraubt oder genietet, die sich aus der Innenfläche des Spiegelgehäusebodens 25 erheben. Aus der Tragplatte 31 steht auf der von den Pfosten 22, 23 abgewandten Seite eine Gelenkkugel 32 vor, auf welche eine Kugelpfanne 33 aufgeklemmt ist. Die Kugelpfanne 33 ist aus em Spiegelglasträger 34 herausgeformt, auf welchen der Spiegel 30 aufgeklebt ist.

Das Spiegelgehäuse 2 läuft in Richtung auf den Spiegelfuß 1 zu in einem umlaufenden Randwulst 24, 26 aus, der am Ende, wie Fig. 2 zeigt, ballig geformt ist. Der hintere Teil 24 des Randwulstes verläuft im wesentlichen geradlinig, senkrecht zur Ebene der Figuren 1 und 2 und ruht in Gebrauchslage in der Kehle am Fuß der Leiste 15. Der übrige Teil des Randwulstes sitzt auf dem umlaufenden, die Fußplatte 12 allseits begrenzenden Rand 17 der Fußplatte 12 derart, daß die Außenkontur des Spiegelgehäuses 2 ohne Absatz und gleichmäßig in die Kontur der Seitenwände 13, 14 des Spiegelfusses 1 übergeht.

Das Spiegelgehäuse 2 wird am Spiegelfuß 1 durch eine Druckfeder 35 gehalten, deren spiegelfußnahes Ende 36 auf einem Vorsprung 37 des Spiegelgehäuses 2, der in dessen Innerem und in der Nähe des Spiegelfusses 1 ausgebildet ist, abgestützt ist. Das vom Spiegelfuß 1 abgewandte Ende 38 der Druckfeder 35 ist mit einem Federstahlband 39 fest verankert, welches sich durch das Innere der Feder und ein am Vorsprung 37 ausgebildetes, längliches Gleitstück 40 erstreckt und an dem spiegelfußseitigen Ende in einen kräftigen Haken 41 eingehängt ist, welcher den Zapfen 16 schwenkbar umfaßt. Die Druckfeder 35 erstreckt sich unterhalb der Tragplatte 31 und wird dort durch von der Tragplatte 31 abstehende Begrenzungslappen 42, 43 in ihrer Lage gehalten. Die Druckfeder ist von einem Kunststoffschlauch 44 umhüllt. Für den Druchtritt des Federstahlbandes 39 ist in der in dem Spiegelfuß 1 benachbarten Seitenwand des Spiegelgehäuses 2 eine Öffnung vorgesehen, durch die sich ferner in Figur 1 und 2 nicht dargestellte Organe für einen vom Inneren des Fahrzeugs aus bedienbaren Verstellmechanismus für den Spiegel 30 erstrecken können.

Um die vordere Partie des Spiegelgehäuses 12, also im wesentlichen den Spiegelgehäuseboden 25, unter einem möglichst windschlüpfig, und daher unter einem nach rückwärts weisenden Winkel zur Fahrtrichtung auf die Fahrzeugkarrosserie zulaufen zu lassen, ist das Spiegelgehäuse 2 so nach vorne erweitert, daß seine Tiefe, ausgehend von dem spiegelfußfernen Rand 21 zum Spiegelfuß 1 hin stetig zunimmt, so daß das Spiegelgehäuse 2 also in der Nähe des Spiegelfusses 1 eine wesentlich größere Tiefe besitzt als an seinem äußeren Ende. Dadurch erhält der Boden 25 des Spiegelgehäuses insbesondere in der Nähe des Spiegelfusses 1 gegenüber herkömmlichen Spiegelgehäusen eine stark konvexe Form, der der vordere Abschnitt 26 des Randwulstes folgt. Um das Spiegelgehäuse beim Abklappen nach vorne dennoch möglichst nahe an der Fahrzeugkarrosserie zu halten, ist in dem vorderen Teil der Fußplatte 12 eine Ausnehmung 50 ausgebildet, in welche der vordere Abschnitt 28 des Spiegelgehäusebodens 25 mit zugehörigem Abschnitt 26 seines Ringwulstes eintauchen kann. Die Ausnehmung 50 wird seitlich durch den verbleibenden Rand 17 begrenzt, auf welchem der Randwulst 24, 26 des Spiegelgehäuses 2 in der Gebrauchsstellung unter Wirkung der Druckfeder 35 ruht. Nach innen ist die Ausnehmung 50 von einer kalottenartigen Wand 18 begrenzt, deren Form im wesentlichen einem Abschnitt eines Ellipsoides entspricht. Nach hinten wird die Ausnehmung 50 von einer Querwand 19 begrenzt, die sich quer zur Fußplatte 12 erstreckt und in die Wand 18 übergeht. Dadurch wird an dem Übergang der Querwand 19 zur kalottenförmigen Wand 18 eine Tasche 20 gebildet, die etwa kreisbogenförmig ist.

Wie Figur 2 zeigt, ruht in der Gebrauchsstellung des Spiegelgehäuses das ballige Ende des Randwulstabschnittes 26 im wesentlichen im Linienkontakt auf dem entsprechend ballig ausgeführten Rand 17, soweit dieser die Ausnehmung 50 begrenzt. Wird das Spiegelgehäuse 2 durch Krafteinwirkung in Fahrtrichtung 4 aus seiner Gebrauchslage nach vorne gegen die Druckfeder 35 abgeklappt, rutscht der Randwulst 26 vom Rand 17 nach hinten ab und taucht in die Ausnehmung 50 ein, bis der Abschnitt 26 in der Tasche 20 eingefangen ist. Das Spiegelgehäuse 2 nimmt dann die in Fig. 1 oben dargestellte vordere, abgeklappte Endlage ein. Nach Beendigung der Krafteinwirkung in Fahrtrichtung 4 kehrt das Spiegelgehäuse 2 unter der Wirkung der Druckfeder 35 wieder in seine Gebrauchslage zurück.

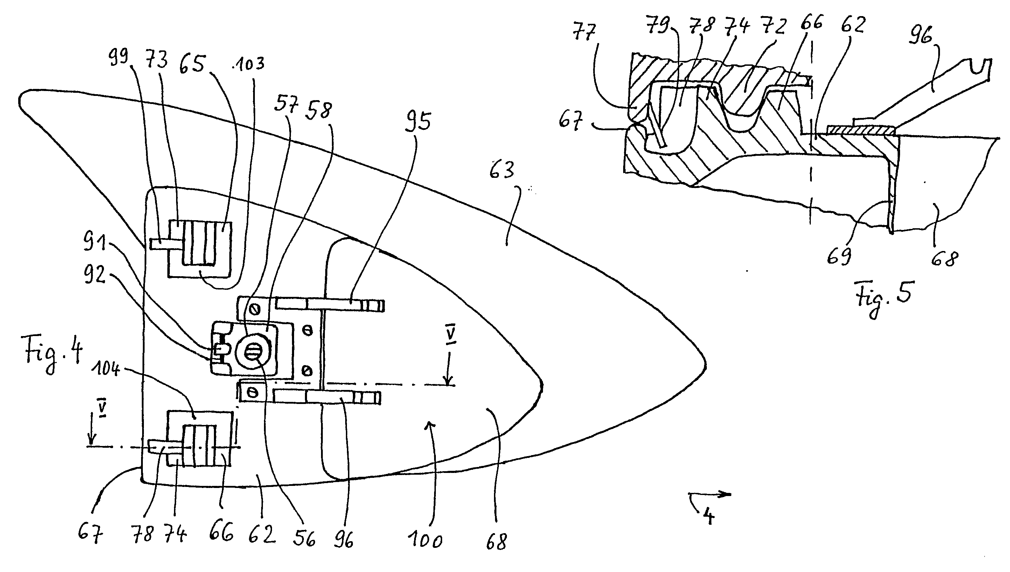

Das in den Figuren 3 bis 5 dargestellte zweite Ausführungsbeispiel der Erfindung gleicht in den wesentlichen Merkmalen dem Außenrückspiegel, der vorstehend anhand der Figuren 1 und 2 erläutert worden ist. So weist der Spiegelfuß 51 eine zu seiner Montageseite 61 nach außen beabstandete Fußplatte 62 auf, welche an ihrem Rand über geschwungene Seitenwände 63, 64 in die Montageseite 61 übergeht. In den von den Seitenwänden 63, 64 und der Fußplatte 62 umschlossenen Raum dringt eine kalottenförmige Wand 68 ein, deren vorderer, oberer und unterer Rand in den Rand der Seitenwand 63 mündet, und deren hinteres Ende sich in einer Querwand 69 fortsetzt, die sich quer zur Fußplatte 62 erstreckt und mit dieser bündig abschließt. Die Wände 68, 69 begrenzen eine Ausnehmung 100, welche in Gebrauchsstellung des Spiegelgehäuses 52 vom Randwulst 76 des Spiegelgehäuses 52 nach außen abgedeckt ist und in welche der Randwulst 76 bei Abklappen des Spiegelgehäuses 52 nach vorne eintauchen kann. Der eingetauchte Randwulst 76 ist in Figur 3 bei 76' gestrichelt angedeutet.

Die Fußplatte 62 weist einen Durchbruch 60 auf, der mit einer Öffnung 59 in der Montageseite 61 des Spiegelfußes 51 fluchtet. In die Öffnung 59 ist ein Lagerteil 58 fest eingesetzt, in welchem eine Kugel 57 eines stangenförmigen Betätigungsorgans 56 für den noch zu erläuternden Verstellmechanismus des Spiegels 80 allseits drehbar jedoch unverschiebbar gehalten ist. An der Montageseite 61 ist neben dem Durchbruch 60 ein Haken 91 mittels eines von ihm umfaßten Stiftes 92 verschwenkbar gehalten.

Auf der Fußplatte 62 sind in der Nähe ihres vorderen Endes am Übergang zur Querwand 69 zwei beabstandete Gabeln 95, 96 befestigt, von denen in Figur 3 die unterhalb der Schnittebene der Figur 3 befindliche Gabel 96 in Ansicht zu erkennen ist. Beide Gabeln 95, 96 erstrecken sich im wesentlichen parallel zueinander und münden außerhalb der Fußplatte 62 und über der Ausnehmung 100 derart, daß eine im Spiegelgehäuse 52 verankerte Welle 97 von den Klauen der Gabeln 95, 96 aufgenommen ist. Wenn daher das Spiegelgehäuse 52 aus der in Figur 3 im unteren Teil dargestellten, die Ausnehmung 100 abdeckenden Gebrauchslage nach vorne abgeschwenkt wird, stellt die in den Gabeln 95, 96 eingefangene Welle 97 das vordere Lager dar, um welche das Spiegelgehäuse 52 in die im oberen Teil der Figur 3 dargestellte, nach vorne abgeklappte Lage verschwenkt.

Das Spiegelgehäuse 52 besitzt an der der Fußplatte 62 zuweisenden Seite eine Stirn 70, welche zwei zur Fußplatte 62 weisende Öffnungen besitzt. In der kleineren, näher am Spiegelgehäuseboden 75 ausgebildeten Öffnung sitzt ein mittig durchbohrtes Führungsstück 90, auf welchem sich das spiegelfußseitige Ende 86 einer Druckfeder 85 abstützt. Durch die mittige Bohrung 89 des Führungsstückes 90 erstreckt sich ein biegbares Stahlband 88, dessen eines Ende in den Haken 91 eingehängt ist und dessen anderes Ende mit dem spiegelfußfernen Ende 84 der Druckfeder 85 fest verankert ist. Das Stahlband 88 erstreckt sich demzufolge von dem freien, umgebogenen Ende des Hakens 91 durch die Bohrung 89 und das Innere der Druckfeder 85 bis zu deren Ende 84. Die Öffnung, in welcher das Führungsstück 90 sitzt, ist in der Stirnwand 70 des Spiegelgehäuses in Bezug zur Verankerung des Hakens 91 an solcher Stelle vorgesehen, daß das Spiegelgehäuse 52 durch die Druckfeder 85 in der abgeklappten stellung selbsttätig gehalten wird.

Die größere der beiden in der Stirnwand 70 vorgesehenen Öffnungen 93 erstreckt sich zwischen dem hinteren Randwulst 77 des Spiegelgehäusebodens 75 und der kleineren Öffnung derart, daß für die Verstell bewegungen des Spiegels 80 durch die Verstellorgane und die Klappbewegungen des Spiegelgehäuses 52 genügend Bewegungsfreiheit für die Organe bleibt. Aus der Stirnwand 70 steht hinten neben der Öffnung 93 ein Paar beabstandeter Führungsklötze vor, von denen in Figur 3 der unterhalb der Zeichenebene befindliche Führungsklotz 72 zu erkennen ist. In der Gebrauchslage des Spiegelgehäuses 52 ist jeder der beiden Führungsklötze zwischen einem Paar vorderer Haltenocken 65, 66 und einem Paar hinterer Haltenocken 73, 74 eingefangen. Dadurch gewinnt das Spiegelgehäuse 52 in Gebrauchslage zusätzlich zur Verankerung der Welle 97 in den Gabeln 95, 96 eine definierte Auflage auf der Fußplatte 62 in Fahrtrichtung 4. Die obere Haltenocke 73 ist mit der oberen Haltenocke 65 durch einen unteren Steg 103 verbunden, gegen den sich der obere, nicht dargestellte Führungsklotz in Gebrauchslage seitlich anlegen kann. Die untere Haltenocke 74 ist mit der unteren Haltenocke 66 durch einen oberen Steg 104 verbunden, gegen den sich der untere Führungsklotz 72 in Gebrauchslage seitlich anlegen kann. Dadurch ergibt sich eine in der Vertikalen definierte Gebrauchslage des Spiegelgehäuses 52. Jede der beiden hinteren Haltenocken 73, 74 weist hinten eine schlitzförmige Ausnehmung 78, 99 auf, in welche jeweils ein aus dem Randwulst 77 vorstehender Führungsstift (dargestellt ist nur der untere Führungsstift 79) eintaucht.

Beim Abklappen des Spiegelgehäuses 52 aus der Gebrauchslage nach hinten rollt der ballige Randwulst 77 auf dem hinteren balligen Ende 67 der Fußplatte 72 ab, wobei die Führungsstifte in den Schlitzen 78, 99 eingefangen bleiben. Dieses Einfangen der Führungsstifte in Schlitzen 78, 99 verhindert, daß beim Abklappen des Spiegelgehäuses 52 nach hinten dieses nicht nach unten oder oben wegrutschen kann. Bei dem Abklappen des Spiegelgehäuses nach hinten kommt die Welle 97 aus den Gabeln 95, 96 frei und die Führungsklötze heben sich aus dem Halt, der ihnen durch die beiden Haltenockenpaare 65, 66 und 73, 74 in Gebrauchslage verliehen wird.

Der Spiegel 80 weist ein übliches Spiegelglas 81 auf, dessen Rückseite auf eine Trägerplatte 82 aufgeklebt ist. Aus der Trägerplatte 82 steht aus der vom Spiegelglas 81 abgewandten Seite eine Kugelpfanne 83 vor, in welcher ein kugeliger Gelenkkopf 87 eingefangen ist, welche sich aus einer Platte 53 erhebt. Die Platte 53 ist auf Abstandspfosten 54, 55 aufgeschraubt, welche sich aus dem Spiegelgehäuseboden 75 in das Innere des Spiegelgehäuses 52 erheben. An einer Seite des Gelenkkopfes 87 steht aus der Platte 53 je eine Lagergabel 98 vor, in deren von der Platte 53 wegweisendem, offenen Schlitz ein an zwei aus der Trägerplatte 82 in Richtung zur Platte 53 vorstehenden, parallelen Böcken gehaltener Stift 102 beweglich eingefangen ist. Der Stift 102 erstreckt sich quer zur Lagergabel 98. Auf der bezüglich der Lagergabel 98 gegenüberliegenden Seite des Gelenkkopfes 87 ist eine nicht dargestellte gleichartige Lagergabel parallel zur Lagergabel 98 ausgebildet, in derem offenen Längsschlitz ein mit dem Zapfen 102 fluchtender und an entsprechenden Böcken auf der Platte 82 gehaltener Stift beweglich eingefangen ist. Die gemeinsame Mittellinie der beide Stifte verläuft durch den Mittelpunkt der Gelenkkugel 87, wenn diese in der Kugelpfanne 83 sitzt, sowie in der Vertikalen, wenn der Außenrückspiegel an ein Fahrzeug anmontiert ist.

Damit ist der Spiegel 80 relativ zum Spiegelgehäuses 52 um zwei zueinander senkrechte Achsen in dem erforderlichen Winkelbereich schwenkbar, und zwar einmal um die Mittellinie des Stiftes 102, der im wesentlichen parallel zur Fußplatte 62 verläuft, und zum anderen um eine zu der Mittellinie des Stiftes 102 durch den Mittelpunkt der Gelenkkugel 87 quer verlaufende, sich parallel zur Zeichenebene der Figur 3 erstreckende Linie, d.h. bei anmontiertem Außenrückspiegel um eine nach außen weisende Horizontale. Ein Verschwenken des Spiegels 80 um die letzt genannte Achse führt zu einem nach oben oder unten Schwenken des Spiegels, während ein Verstellen des Spiegels um die erstgenannte Achse ein Einwärts- oder Auswärtsschwenken des Spiegels bewirkt.

Diese Spiegelverstellung wird erreicht durch das Zusammenwirken der Verstellorgane. Dazu ist ein starres Zwischenglied 105 an einem Ende mit dem spiegelfußseitigen Ende der Stange 56 und am anderen Ende an der Trägerplatte 82 um zur Mittellinie des Stiftes 102 parallele Achsen - schwenkbar angelenkt. Wird daher die Stange 56 etwa vom Inneren des Fahrzeugs aus in Richtung des Pfeiles 5 um den Mittelpunkt der Kugel 57 bewegt, schwenkt der Spiegel nach außen, eine Bewegung entgegen des Pfeiles 5 führt zu einer Einwärtsschwenkung des Spiegels 80. Eine Drehung der Stange 56 um ihre Mittellinie 94 führt zu einer Schwenkbewegung des Spiegels 80 nach oben oder unten, wobei der Stift 102 sich innerhalb des offenen Schlitzes in der Lagergabel 98 bewegt.

Wie in Figur 3 dargestellt, ist das Zwischenglied 105 am spiegelseitigen Ende an einem Schieber 106 angelenkt, der auf der insoweit ebenen Rückseite der Trägerplatte 82 von einem geschlitzten Führungsteil 107 so geführt ist, daß der Schieber 106 parallel zur Rückseite der Trägerplatte 82 verschiebbar ist. Eine Feder 108, welche am Schieber 106 einerseits und an der Trägerplatte 82 andererseits verankert ist, hält den Schieber 106 in der in Gebrauchslage des Spiegelgehäuses 52 vollständig eingeschobenen Stellung. Beim Abschwenken des Spiegelgehäuses 52 nach vorne oder hinten kann der Schieber von dem Zwischenglied 105 gegen die Wirkung der Feder 108 von der Trägerplatte 82 teilweise abgezogen werden, wobei jedoch der Schieber 106 noch von dem Führungsteil 107 erfaßt und die Kopplung zwischen der Stange 56 über das Zwischenglied 105 und dem Spiegel 80 erhalten bleibt.

Die Endlage des Spiegelgehäuses 52 in der nach vorne abgeklappten Stellung ist durch Anlage des Randwulstes 76' an die Querwand bestimmt. Alternativ kann an der Fußplatte 62 eine separate Schulter ausgebildet sein, gegen die die Stirnwand 70 oder ein aus ihr vorstehender Ansatz bei Erreichen der Endlage anliegt.

Im übrigen erkennt man an Fig. 3, daß der Schnitt im Bereich des Schlitzes 78 und der Lagergabel 98 zur besseren Darstellung tiefer gelegt ist.

**Ansprüche**

1. Außenrückspiegel für ein Fahrzeug mit einem Spiegelfuß und einem relativ zum Spiegelfuß aus einer Gebrauchsstellung nach vorne und hinten klappbaren Spiegelgehäuse, dessen spiegelfußnaher Randwulst mittels einer am Spiegelfuß verankerten und an einem Innenteil des Spiegelgehäuses angreifenden Feder gegen den im wesentlichen ebenen Rand einer Fußplatte des Spiegelfußes gehalten ist, wobei der hintere, im wesentlichen gerade Abschnitt des Randwulstes mit dem Rand eine hintere Klappachse bildet und der Randwulst eine Spiegelgehäuseöffnung für die Feder oder ein mit der Feder und dem Spiegelfuß verbundenes Zugorgan umschließt, dadurch gekennzeichnet, daß der vordere Teil der Fußplatte (12, 62) eine Ausnehmung (50, 100) derart aufweist, daß beim Abklappen nach vorne der vordere fußplattennahe Spiegelgehäuseteil (26, 76) in die Ausnehmung eintaucht.

2. Außenrückspiegel nach Anspruch 1, dadurch gekennzeichnet, daß an einem vorderen Abschnitt der Fußplatte (12, 62) ein vorderes offenes Wälzlager für eine innerhalb des Randwulstes (26, 76) am Spiegelgehäuse (52) ausgebildete Leiste (97) vorgesehen ist.

3. Außenrückspiegel nach Anspruch 2, dadurch gekennzeichnet, daß an der Fußplatte (62) zwei beabstandete Gabeln (95, 96) befestigt sind, in welchen die Leiste (97) ausrückbar gehalten ist.

4. Außenrückspiegel nach einem der vorstehenden Ansprüche, dadurch gekennzeichnet, daß die Fußplatte (12, 62) eine Schulter (19, 69) zur Anlage des Randwulstes (26, 76) bei voll nach vorne geklappter Stellung des Spiegelgehäuses (2, 52) aufweist.

5. Außenrückspiegel nach Anspruch 4, dadurch gekennzeichnet, daß an dem Spiegelgehäuse ein Ansatz zur Anlage an die Schulter ausgebildet ist.

6. Außenrückspiegel nach Anspruch 4 oder 5, dadurch gekennzeichnet, daß die Schulter von einer von der Fußplatte (12, 62) einwärts zurückspringenden Querwand (19, 69) gebildet ist, welche Teil der hinteren Begrenzung (19) der Ausnehmung (50, 100) ist.

7. Außenrückspiegel nach einem der vorstehenden Ansprüche, dadurch gekennzeichnet, daß die Ausnehmung von einer kalottenförmig gebogenen Wand (18, 68) und der im wesentlichen ebenen Querwand (19, 69) umschlossen und in Gebrauchslage des Spiegelgehäuses (2, 52) von dem Randwulst (26, 76) abgedeckt ist.

8. Außenrückspiegel nach einem der vorstehdenden Ansprüche, dadurch gekennzeichnet, daß die Feder (35, 85) über ein biegbares Band (39, 88) an einem an der Fußplatte (12, 62) angelenkten Haken (41, 91) verankert ist und sich auf einer spiegelfußnahen Stirnwand (37, 70) abstützt.

9. Außenrückspiegel nach einem der vorstehenden Ansprüche, dadurch gekennzeichnet, daß ein gelenkig miteinander verbundene, starre Glieder (56, 105) aufweisender Verstellmechanismus für den Spiegel (80) an einem Schieber (106) angelenkt ist, welcher auf der Rückseite einer Spiegelglasträgerplatte (82) verschiebbar geführt und von einer an der Spiegelglasträgerplatte (82) befestigten weiteren Feder (108) beaufschlagt ist.

10. Außenrückspiegel nach einem der vorstehenden Ansprüche, dadurch gekennzeichnet, daß aus der Fußplatte (62) zwei beabstandete Paare beabstandeter Haltenocken (65, 66; 73, 74) und aus einer spiegelfußnahen Stirnwand (70) des Spiegelgehäuses (2, 52) gegenüber je einem der Paare je ein Führungsklotz (72) vorstehen, wobei in Gebrauchslage des Spiegelgehäuses (2, 52) je einer der Führungsklötze zwischen den Haltenocken je eines der beiden Paare eingefangen ist.

11. Außenrückspiegel nach Anspruch 11, dadurch gekennzeichnet, daß die oberen Haltenocken (65, 73) durch einen unteren Steg (103) und die unteren Haltenocken (74, 66) durch einen oberen Steg (104) verbunden sind, wobei die Führungsklötze seitlich gegeben jeweils einen der Stege anlegbar sind.

12. Außenrückspiegel nach einem der vorstehenden Ansprüche, dadurch gekennzeichnet, daß aus dem hinteren, geraden Randwulstabschnitt (24, 77) wenigstens ein Dorn (79) zur Fußplatte (12, 62) vorsteht, welcher in einem an der Fußplatte ausgebildeten horizontalen Schlitz (78) bleibend eintaucht.

Fig. 1

Fig. 2

Fig. 3

Fig. 5

Fig. 4